Europäisches Patentamt

European Patent Office

Office européen des brevets

(19)

(11) Publication number: **0 420 172 A1**

# EUROPEAN PATENT APPLICATION

(12)

(21) Application number: **90118451.5**

(22) Date of filing: **26.09.90**

(51) Int. Cl.⁵: **G01P 3/36**, G01P 3/80, G01P 3/68

(30) Priority: **26.09.89 JP 250366/89**

(43) Date of publication of application:
**03.04.91 Bulletin 91/14**

(84) Designated Contracting States:
**AT BE CH DE DK ES FR GB GR IT LI NL SE**

(71) Applicant: **OMRON CORPORATION**
**10, Tsuchido-cho Hanazono Ukyo-ku**
**Kyoto 616(JP)**

(72) Inventor: **Miyazaki, Hidenori, Omron**
**Corporation**
**Intellectual Property Center, 20, Igadera**
**Shimokaiinji Nagaokakyo-shi, Kyoto 617(JP)**
Inventor: **Kitajima, Hiroshi, Omron**
**Corporation**
**Intellectual Property Center, 20, Igadera**
**Shimokaiinji Nagaokakyo-shi, Kyoto 617(JP)**
Inventor: **Yamashita, Tsukasa, Omron**
**Corporation**
**Intellectual Property Center, 20, Igadera**
**Shimokaiinji Nagaokakyo-shi, Kyoto 617(JP)**

(74) Representative: **WILHELMS, KILIAN &**
**PARTNER Patentanwälte**
**Eduard-Schmid-Strasse 2**
**W-8000 München 90(DE)**

(54) **Speckle velocity sensor.**

(57) The invention relates to a speckle speed sensor using either the balance correlation speed measurement method or the zero cross speed measuring method. The speckle speed sensor comprises at least one light-receiving means (8, 9) for reception of a speckle pattern produced by projection of a laser beam on a moving object (7). The light-receiving means (8, 9) uses a light reception aperture (20) elongated in a direction perpendicular to the direction of movement (5) of the speckle pattern. The elongated aperture configuration is conducive to a diminished measurement error.

( I )

FIG.6

## SPECKLE VELOCITY SENSOR

FIELD OF THE INVENTION

The present invention relates a speckle sensor adapted to receive a random interference pattern (hereinafter referred to as "speckle pattern") produced by the laser radiation reflected from a moving object and, based on charges in the speckle pattern, measure the velocity of the moving object.

BACKGROUND OF THE INVENTION

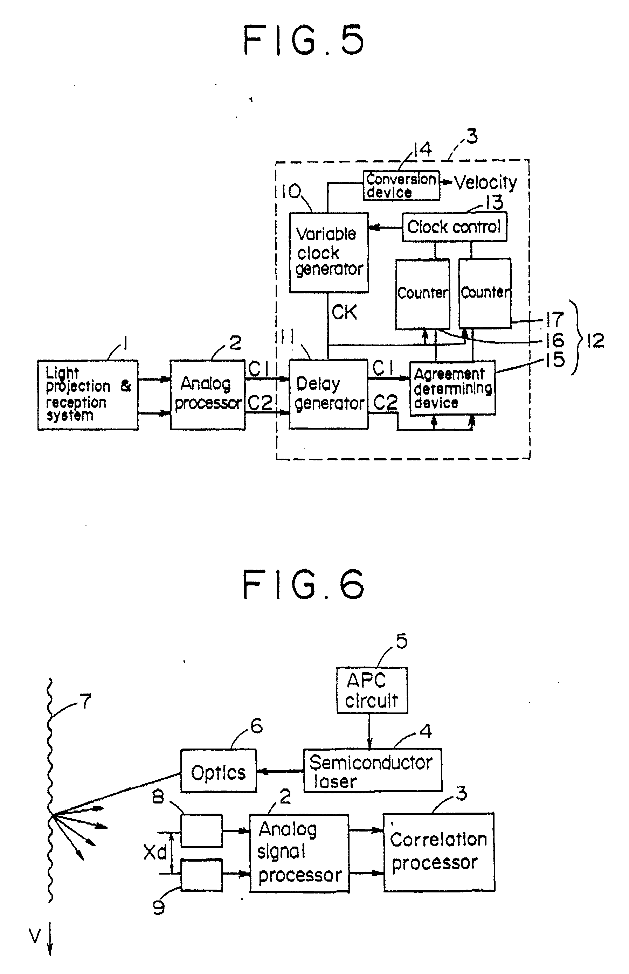

Several of the known methods for the measurement of speed with a velocity sensor include the balanced correlation measurement method, the space lattice measurement method and the zero-cross measurement method. In Japanese Kokai Patent Publication No. 63-31777, the applicant previously proposed a speckle velocity sensor arrangement that applies the balanced correlation measurement method, the details of which are incorporated herein by reference. As shown in Fig. 5, the speckle velocity sensor generally comprises a light emission and reception system 1, an analog signal processor 2 and a correlation processor 3.

The detailed construction of the emission and reception system 1, which is shown in Fig. 6, includes a light source implemented by a semiconductor laser 4, the power output of which is stabilized by an automatic APC circuit 5. The emission beam from this semiconductor laser 4 is collimated by optics 6 and projected onto a moving object 7. The projected beam is scattered on the surface of the object 7 and the reflected radiation forms a speckle pattern owing to the coherence of the applied laser radiation. This speckle pattern is received by first and second light-receiving devices 8, 9 through their circular aperatures and the optical signals are photoelectrically converted and the resulting electrical signals are in turn fed to the signal processor 2.

The light-receiving devices 8, 9 are disposed at a predetermined interval or spacing $X_d$ in the direction of movement of the object 7, the spacing $X_d$ being not less than the mean speckle size.

The analog signal processor 2 discriminates the reception signals from the respective light receiving devices 8, 9 at a predetermined level and converts those signals into binary outputs $C_1$, $C_2$. The binary output $C_2$ from the second light-receiving device is delayed by a delay time $\tau_d$ with respect to the binary output $C_1$ from the first light-receiving device. Therefore, the binary output $C_1$

precedes the delayed binary output $C_2$ as inputs to the correlation processor 3.

The correlation processor 3 comprises a variable clock generator 10, a delay generator 11, a correlation processor 12, a clock controller 13 and a conversion device 14. The variable clock generator 10 generates clock signals CK having a frequency $f_{ck}$ such that the delay time $\tau_d$ will assume the constant number $K_p$ of clocks. The delay generator 11 responds to the clock signal CK by applying the predetermined delay time $\tau_d$ to the preceding signal $C_1$.

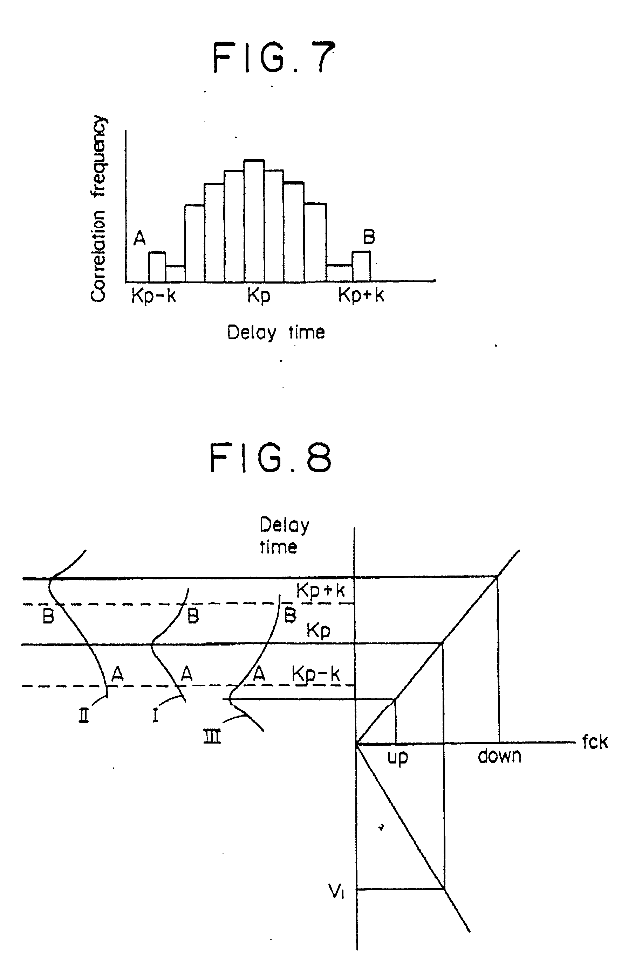

The correlation processor 12 receives this delayed preceding signal $C_1$, and delayed signal $C_2$ at the timing of clock signal CK and compares $C_1$ and $C_2$ to calculate a correlation frequency A and B. Specifically, the correlation processor 12 comprises an agreement device 15 and a pair of counters 16, 17 for counting the correlation frequencies A, B at the time points $K_p + K$ (A) and $K_p - K$ (B) preceding and following the delay time $\tau_d$ (corresponding to the number $K_p$ clocks) (see Fig. 7).

The clock controller 13 compares the correlation frequencies A and B at the time points $K_p + K$ and $K_p - K$ and, based on the result of this comparison, alters the frequency $f_{ck}$ of the clock signals CK. The conversion device 14 calculates the velocity V of the object 7 using the altered frequency $f_{ck}$ of the clock signal CK based on the above-described agreement of the correlation frequencies A and B.

Fig. 8 illustrates the principle used for updating the frequency $f_{ck}$. The element I represents the agreement state A = B of the correlation frequency distribution; II represents the correlation frequency distribution where A < B, and III represents the correlation frequency distribution at A > B. It will be understood from this diagram thereby that when the correlation frequency distribution is A < B, the frequency $f_{ck}$ of the clock signal CK is reduced and when the correlation frequency distribution is A > B, the frequency $f_{ck}$ of the clock signal CK is increased. The frequency $f_{ck}$ of clock signal CK is thus updated until the agreement state I where A = B is established. In state I, the conversion device 14 calculates the velocity V of the object 7 using the frequency $f_{ck}$ in this balanced state, by means of the following equation:

$$V = \frac{X_d}{f} \cdot \frac{1}{K_p} \cdot f_{ck}$$

wherein δ is a speckle translation magnifying factor.

By making use of the characteristic that the correlation frequency distribution has a substantially symmetrical configuration about $K_p$, this system first extracts the correlation frequencies at the symmetrical points $K_p + K$ and $K_p - K$, compares the frequencies and, then based on the results of that comparison, alters the frequency $f_{ck}$ of the clock signal CK so that the correlation frequencies at Kp + K and $K_p - K$ are equalized.

In the speckle velocity sensor of the above construction, the first and second light-receiving devices 8, 9 have circular apertures of a sufficiently large area to attain a high Signal-to-Noise ratio. However, it has been found that the circular aperture configuration has drawbacks in that the correlation frequency is not sufficiently symmetrical. As a result, velocity measurement errors develop because of the asymmetrical characteristic of the correlation frequencies.

The speckle velocity sensor according to the zero-cross method also has a drawback in that the circular aperature for the light-receiving devices 8, 9 is of such a large area that it causes light to be averaged. As a result, the number of zero cross counts is decreased since the light received through the aperture does not sharply change. As a result of this decreased zero cross-count, measurement errors occur.

## SUMMARY OF THE INVENTION

In view of the foregoing, it should be apparent that there still exists a need in the art for a novel speckle velocity sensor that provides a relatively small measurement error by incorporating an aperature configuration for a light-receiving device.

Briefly described, the present invention is directed to a speckle velocity sensor comprising a light-receiving device the aperture of which is elongated in a direction perpendicular to the direction of movement of the speckle pattern. Because this elongated aperture configuration is implemented as a sensor using the correlation method, the correlation frequency distribution is symmetrical and the measurement error is reduced. When implemented as a sensor according to the zero-cross measurement method, the number of zero crosses is increased, thus resulting in a reduced measurement error.

Other objects and advantages of the invention will become apparent from the following description and accompanying drawings.

## BRIEF DESCRIPTION OF THE DRAWINGS.

FIG. 1 is a schematic diagram illustrating the aperture configurations of the light-receiving device forming a first embodiment of the present invention;

FIGS. 2A, 2B, 2C and 2D are graphs that represent correlation intensity vs. delay time;

FIG. 3 is a schematic diagram comparing the conventional aperture configuration with the aperture configuration according to the invention;

FIG. 4 is a schematic diagram that illustrates the arrangement of light-receiving devices for a zero-cross type velocity sensor forming a second embodiment of the present invention;

FIG. 5 is a block diagram showing the construction of the speckle velocity sensor employing the balanced correlation speed measurement method;

FIG. 6 is a schematic view illustrating the construction of the light emission and reception system for the velocity sensor;

FIG. 7 is a graph diagram of the correlation frequency distribution; and

FIG. 8 is a graph diagram illustrating the principle for updating a clock frequency.

## DETAILED DESCRIPTION OF THE PREFERRED EMBODIMENTS.

The speckle velocity sensor of the present invention includes one or more light-receiving devices for receiving a speckle pattern according to the afore-described methods of velocity measurement. Taking a speckle velocity sensor according to the balanced correlation measurement method as an example, the sensor according to the invention comprises, just as the prior art sensor shown in Fig. 5, a light emission-reception device 1, an analog signal processor 2 and a correlation processor 3.

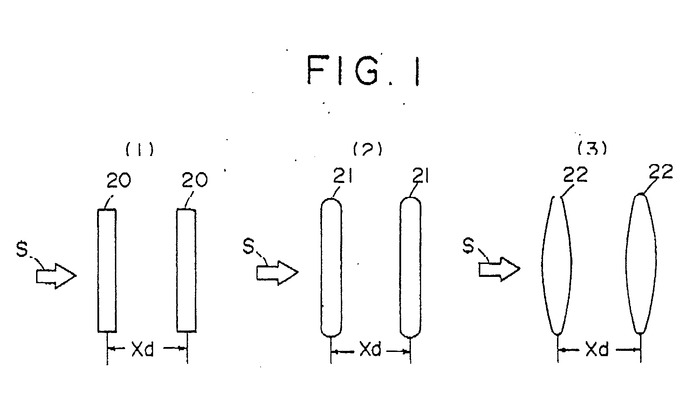

Figs. 1 (1) through (3) illustrate apertures 20-22 for the light-receiving means 8, 9 shown generally in Fig. 6. The aperatures 20,20, 21,21 and 22,22 of the light-receiving devices are respectively positioned with a spacing $X_d$ in the direction of movement of the speckle pattern (indicated by the arrows). Thus, in each of these light-receiving devices, the aperture is elongated in a direction perpendicular to the direction of movement of the speckle pattern.

The aperatures 20, 21 and 22 illustrated in Figs. 1 (1) through (3) are elongated using a relatively large aspect ratio. The aperture 20 shown in Fig. 1 (1) is a rectangular aperture. The aperature 21 shown in Fig. 1 (2) is an oblong aperture with arcuate top and bottom sides. The aperture 22 shown in Fig. 1 (3) is an elliptical aperture with curved top, bottom, left and right sides.

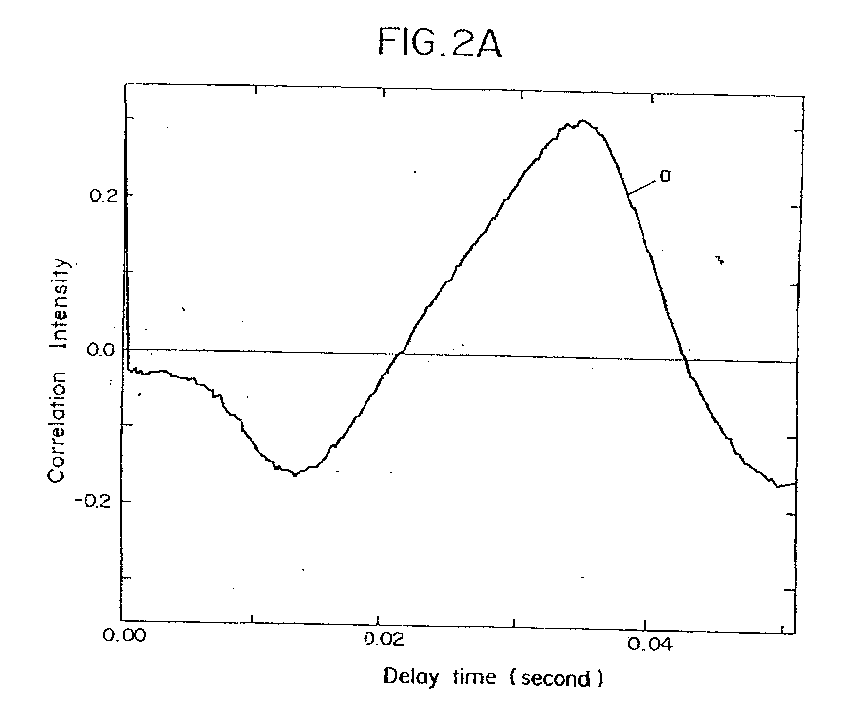

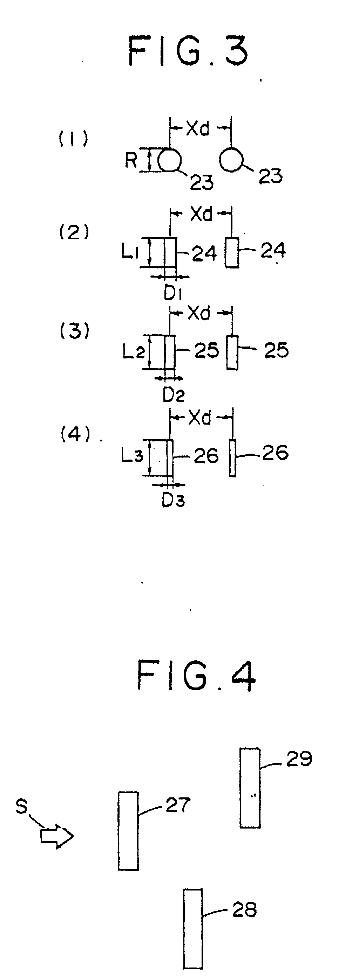

Figs. 2A-2D show the correlation frequency distribution pattern obtained with each of the speckle velocity sensors having a different aperture configuration as shown in Fig. 1 (1). In the graphs, correlation intensity data are plotted on the abscissa against the delay time on the ordinate. In Fig. 2A, the correlation characteristic curve a is the result produced by the prior art speckle velocity sensor in which the apertures of the two light-receiving devices are circular as illustrated in Fig. 3 (1), with the spacing $X_d$ being 2.7 mm and the diameter R being 1 mm.

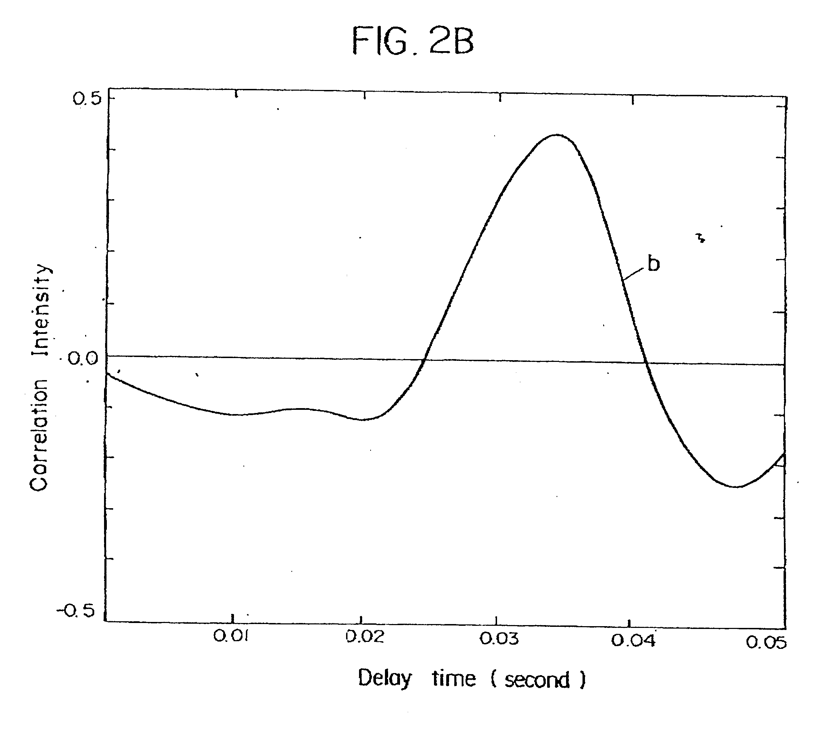

The Fig. 2B correlation characteristic curve b is the result produced by a speckle velocity sensor having a rectangular aperture configuration as shown in Fig. 1(1) and elongated in a direction perpendicular to the direction of movement of the speckle pattern as illustrated in Fig. 3 (2). The area of the aperture of 3 (2) is equal to that of the aperture of Fig. 3 (1) and the dimensions of its sides are 3.14 mm for $L_1$ and 1 mm for $D_1$.

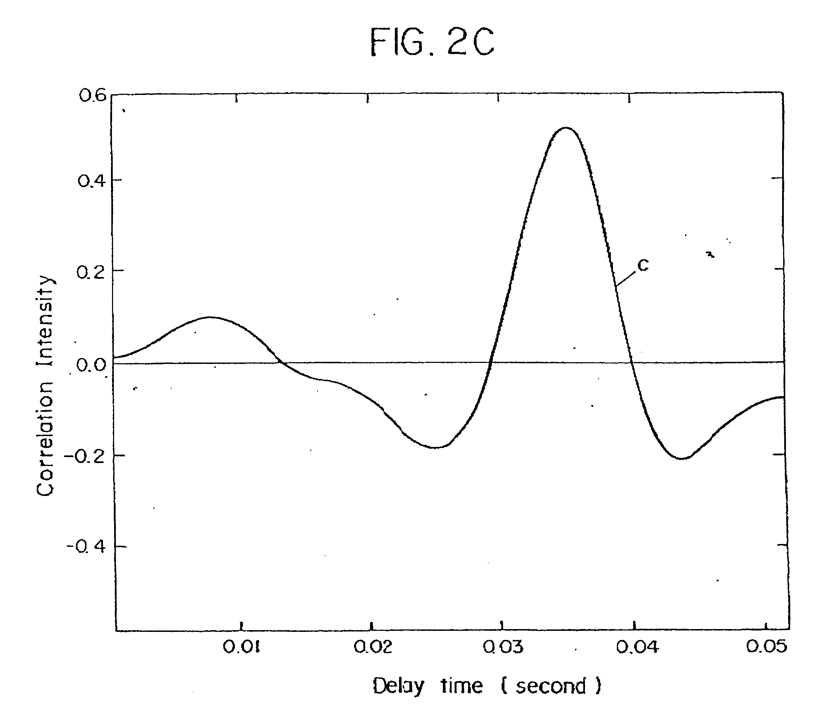

The Fig. 2C correlation characteristic curve c is the result produced by a speckle velocity sensor of the invention having the rectangular apertures 25,25 shown in Fig. 3 (3). Specifically, the apertures of Fig. 3 (3) are more elongated and narrower than 3(2) where the aperture area is equal to that of Fig. 3 (1) but $L_2 = 8.28$ and $D_2 = 0.5$ mm.

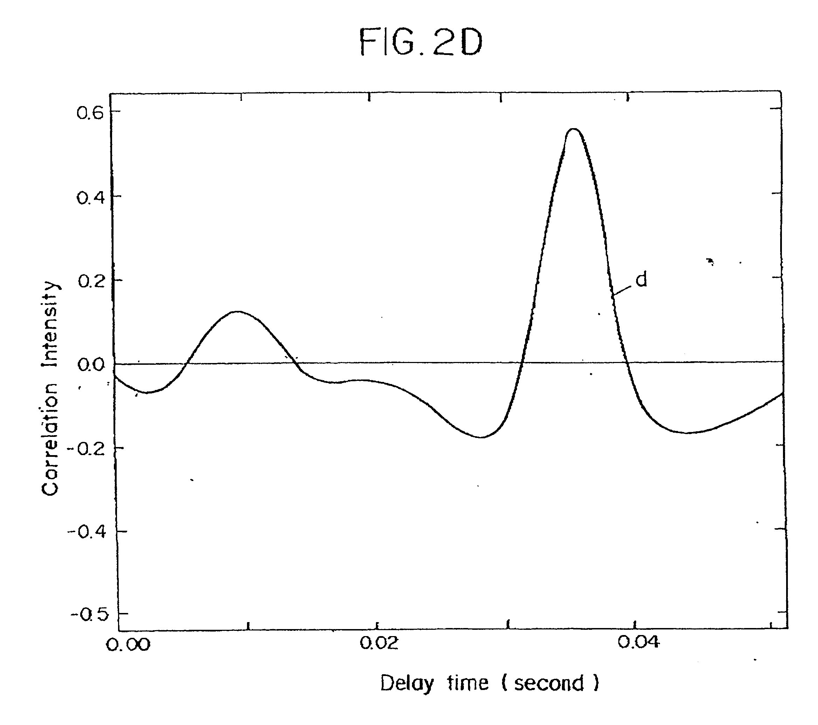

The Fig. 2D correlation characteristic curve d is the result produced by a speckle velocity sensor of the invention wherein the apertures 26,26 of Fig. 3 (4) are yet still more elongated and narrower than as illustrated in Fig. 3 (3). The area of each aperture is equal to that shown in Fig. 3 (1) but $L_2 = 12.56$ mm and $D_2 = 0.25$ mm.

In all of the arrangements depicted in Fig. 3 (2) through 3 (4), the spacing $X_d$ between the two apertures is the same 2.7 mm.

It is seen from Fig. 2, therefore, that compared with the Fig. 2A correlation characteristic curve a produced by the circular aperture 23,23, the Figs. 2B-2D correlation characteristic curves b , c and d are more accurately symmetrical about the peak point. Furthermore, as demonstrated by Figs. 2A-2D, the shorter the aperture dimension parallel to the direction of movement of the speckle pattern, the more symmetrical the correlation characteristic curve. Thus, when the aperture of the light-receiving device is elongated in a direction perpendicular to the direction of movement of the speckle pattern, the symmetry of the correlation characteristic curve (correlation frequency distribution) of a correlation speckle velocity sensor is increased which results in diminished measurement error.

Fig. 4 indicates the arrangement of three light-receiving devices in a speckle velocity sensor according to the zero-cross method. The apertures 27-29 of these light-receiving devices are also elongated in a direction perpendicular to the direction of movement indicated by arrow S of the speckle pattern.

Although, in this embodiment, three light-receiving devices are used for averaging the measured zero cross counts, it is possible to employ only one, or for that matter, any number of optional light-receiving devices. The advantage of this arrangement is that when the aperture of the light-receiving device in a zero-cross speckle velocity sensor is elongated in a direction perpendicular to the direction of movement of the speckle pattern, the small slit shape of the aperture causes the contrasts in changes in a moving speckle pattern to be more sharply represented. As a result, the number of zero crosses counted by the velocity measurement system in increased and measurement error is diminished.

The above description and the accompanying drawings are merely illustrative of the application of the principles of the present invention and are not limiting. Numerous other arrangements which embody the principles of the invention and which fall within its spirit and scope may be readily devised by those skilled in the art. Accordingly, the invention is not limited by the foregoing description, but is only limited by the scope of the appended claims.

## Claims

1. A speckle velocity sensor comprising:
light projecting means for projecting light on a moving object to create a moving reflection speckle pattern; and
light receiving means for reception of said speckle pattern reflected by said moving object wherein said light receiving means includes at least one light reception aperture elongated in a direction substantially perpendicular to a direction of movement of said speckle pattern.

2. The speckle velocity sensor of claim 1, wherein said light projecting means comprises a laser beam source which projects a laser beam onto said moving object.

3. The speckle velocity sensor of claim 1, wherein said light reception aperture is substantially rectangular.

4. The speckle velocity sensor of claim 1, wherein said light reception aperture is oblong having substantially arcuate top and bottom sides.

5. The speckle velocity sensor according to claim 1, wherein said light reception aperture is substantially elliptical having curved sides.

6. The speckle velocity sensor according to claim 1, further comprising means for performing a velocity correlation measurement producing a correlation characteristic curve having a peak measurement point and wherein said elongated light-receiving means produces increased symmetrical correlation and frequency distribution about said peak measurement point.

7. The speckle velocity sensor according to claim 6, such that said elongated light reception aperture has its narrowest dimension substantially parallel to a direction of movement of said speckle pattern.

8. The speckle velocity sensor according to claim 1, wherein said light receiving means comprises a plurality of light receiving devices each having a reception aperture which is elongated in a direction perpendicular to a direction of the movement of said speckle pattern.

# FIG. 1

(1)

20    20

S →

|← Xd →|

(2)

21    21

S →

|← Xd →|

(3)

22    22

S →

|← Xd →|

# FIG.2A

EP 0 420 172 A1

FIG. 2B

# FIG. 2C

EP 0 420 172 A1

FIG.2D

# FIG. 3

(1) R $\quad$ Xd

(2) L₁ $\quad$ Xd $\quad$ 24 $\quad$ 24 $\quad$ D₁

(3) L₂ $\quad$ Xd $\quad$ 25 $\quad$ 25 $\quad$ D₂

(4) L₃ $\quad$ Xd $\quad$ 26 $\quad$ 26 $\quad$ D₃

# FIG. 4

S

27

29

28

# FIG.5

Conversion device →Velocity
14

Clock control
13

Variable clock generator
10

Counter | Counter
17
16
15
} 12

CK

Light projection & reception system
1

Analog processor
2

C1
C2

Delay generator
11

C1
C2

Agreement determining device

# FIG.6

APC circuit
5

Optics
6

Semiconductor laser
4

7

V ↓

Xd

8

9

Analog signal processor
2

Correlation processor
3

# FIG.7

# FIG.8

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP - A2 - 0 295 720 (OMRON) * Abstract; fig. 5,8 * | 1,2,6 | G 01 P 3/36 G 01 P 3/80 G 01 P 3/68 |
| A | US - A - 4 311 383 (OHTSUBO) * Fig. 1,3; abstract * | 1,2,6, 8 | |
| A | SOVIET INVENTIONS ILLSTRATED, EL section, week 9012, May 2, 1990 DERWENT PUBLICATIONS LTD, London, S02 * SU-A-1-506 359 (MOSC AVIATION INST.) * & SU-A-1-506 359 (7.9.1989) | 1,2,6 | |
| A | REGELUNGSTECHNISCHE PRAXIS, vol. 24(3), 1982, Munich F. MESCH "Geschwindigkeits- und Durchflußmessung mit Korrelationsverfahren" pages 73-82 * Page 77; fig. 7 * | 1,3,6, 7,8 | TECHNICAL FIELDS SEARCHED (Int. Cl.5) G 01 P 3/00 |

The present search report has been drawn up for all claims

| Place of search | Date of completion of the search | Examiner |
|---|---|---|
| VIENNA | 05-11-1990 | BURGHARDT |

EPO FORM 1503 03.82 (P0401)